# EUROPÄISCHE PATENTSCHRIFT

(11) **EP 1 042 145 B1**
(45) Veröffentlichungstag und Bekanntmachung des Hinweises auf die Patenterteilung: **23.04.2003**
(21) Anmeldenummer: 98956924.9
(22) Anmeldetag: 17.11.1998
(51) Int. Cl.: B60R 22/20, B60R 22/26

(54) **RÜCKHALTEEINRICHTUNG MIT EINEM SICHERHEITSGURT**
RESTRAINT DEVICE WITH A SAFETY BELT
DISPOSITIF DE RETENUE DOTE D'UNE CEINTURE DE SECURITE

(30) Priorität: 02.01.1998 DE 19800071
(43) Veröffentlichungstag der Anmeldung: 11.10.2000
(73) Patentinhaber: Volkswagen Aktiengesellschaft, 38436 Wolfsburg (DE)
(72) Erfinder: MÖKER, Carsten, D-38471 Rühen (DE)
(86) Internationale Anmeldenummer: EP9807358
(87) Internationale Veröffentlichungsnummer: WO99035013

(56) Entgegenhaltungen:
- DE-A- 3 740 937
- DE-A- 3 818 920
- GB-A- 2 278 535

## Beschreibung

Die Erfindung betrifft eine Rückhatteeinrichtung mit einem Sicherheitsgurt für einen Mittelsitz eines Fahrzeuges gemäß dem Oberbegriff des Patentanspruchs 1.

Es ist allgemein bekannt, als Rückhalteeinrichtungen für Mittelsitze in Kraftfahrzeugen Beckengurte zu verwenden. Dagegen werden an den äußeren Sitzen zusätzliche Sicherheitsgurte in Form von Schultergurten verwendet. Die Kombination Schultergurt und Beckengurt bietet eine wesentliche höhere Sicherheit für den Benutzer als ein Beckengurt allein.

Aus der gattungsgemässen GB-A 2 278 535 ist eine Rückhalteeinrichtung bekannt, bei der eine als Gurtumlenkelement ausgebildete Halterung gegenüber einem Sitzrahmen zwischen einer Ruhestellung und einer Arbeitsstellung beweglich ist. Die mittels eines Führungselementes entlang dem Sitzrahmen verschiebbare Halterung ist dabei in verschiedenen Positionen arretierbar. In der Arbeitsstellung ragt die Halterung über die Polsterung des Sitzes hinaus und ermöglicht so einen einwandfreien Verlauf des Schultergurtes über dem Körper des Insassens.

Die DE 37 40 937 offenbart eine Vorrichtung zur Halterung von Sicherheitsgurten, bei der eine als Gurtumlenkelement ausgeführte Halterung einer sogenannten Hutablage zugewiesen ist. Gegenüber dieser Hutablage ist die auf einer Gleitstange gehaltene Halterung höhenverstellbar und in verschiedenen Positionen arretierbar.

Aus der DE 34 01 529 C2 ist eine Verstelleinrichtung eines Anlenkpunktes eines Sicherheitsgurtes bekannt, die beispielsweise im Bereich der B- oder C-Säule an den Innenseiten der Fahrzeugkarosserie ungefähr in Schulterhöhe angeordnet sein kann. Je nach Größe des Benutzers kann der Anlenkpunkt für den Sicherheitsgurt nach oben oder nach unten verschoben werden, damit der Schultergurt richtig - nicht zu hoch und nicht zu tief - am Körper des Benutzers anliegt.

Ein Schultergurt kann nur dann den gewünschten Sicherheitseffekt haben, wenn der Gurt korrekt angelegt werden kann, d. h. daß der obere Anlenkpunkt des Schultergurtes zur Anpassung an die jeweilige Körpergröße in der Höhe einstellbar sein muß. Da im Bereich der Mittelsitze entsprechende Befestigungsmöglichkeiten oftmals fehlen, werden dort häufig keine Schultergurte verwendet. In einigen Fahrzeugmodellen ist durch offenkundige Benutzung ein dritter Dreipunktgurt bekannt, dessen oberer Anlenkpunkt über eine Umlenkung einer hinteren Fahrzeugsäule oder auf direktem Weg dem Fahrzeugdach zugewiesen ist.

Aufgabe der Erfindung ist es, für Insassen auf Mittelsitzen eine Rückhalteeinrichtung mit einem Sicherheitsgurt und Gurtkomfort bereitzustellen, die bei guter Bedienbarkeit ein hohes Maß an Sicherheit gewährleistet.

Diese Aufgabe wird mit den Merkmalen des Anspruchs 1 gelöst.

Gemäß Anspruch 1 bildet der Sicherheitsgurt einen Schultergurt, der im oberen Bereich der Rückenlehne des Mittelsitzes in einer am Rahmen des Mittelsitzes befestigten höhenverstellbaren, über die Polsterung des Mittelsitzes hinausragenden Halterung einliegt. Der Schultergurt läßt sich somit an die Schulterhöhe des jeweiligen Benutzers in seiner Position anpassen, wodurch eine Rückhalteeinrichtung im Bereich eines Mittelsitzes geschaffen wird, die ein hohes Maß an Sicherheit gewährleistet. Weiter ist vorgesehen, daß die Halterung ein höhenverstellbares Umlenkelement hat, um das der Schultergurt zu einem Gurtaufrollautomaten geführt ist. Derartige Gurtaufrollautomaten sind allgemein bekannt. In einer Unfallsituation sperren die Gurtaufrollautomaten den Aufwickelmechanismus, so daß der Sicherheitsgurt sich vom Gurtaufrollautomaten nicht abwickeln kann. Die Halterung ist für den Gurtbenutzer frei zugänglich mittels eines Adapters an einem arretierbaren Schieber befestigt, dessen Arretierung durch eine über das Umlenkelement auf den Adapter ausgeübte Druckkraft lösbar ist. Der Adapter ist gegenüber dem Schieber verschwenkbar und kann diesen durch Kippbewegungen aus der Arretierung lösen.

Die Einstellung der Halterung, die einen höhenverstellbaren Anlenkpunkt für den Schultergurt bildet, kann somit durch leichten Druck auf die Halterung und durch eine gleichzeitige Höhenverschiebung erfolgen, bis die Halterung in einer gewünschten Höhenposition wieder losgelassen wird und sich dadurch arretiert. Der über die Schulter eines Gurtbenutzers verlaufende Schultergurt übt durch die vom Gurtaufrollautomaten erzeugte Zugkraft eine ständige Zugkraft auf die Halterung aus. Diese ständige Zugkraft wirkt einem unbeabsichtigten Lösen der Arretierung zusätzlich entgegen.

Bevorzugt ist an dem Schieber ein nach oben abstehender, langgestreckter Adapter befestigt, an dessen oberem Ende die Halterung von der Rückenlehne nach vorne absteht. Der Adapter macht es möglich, ein herkömmliches Höhenverstellelement mit einem daran angeordneten höhenverstellbaren und arretierbaren Schieber zu verwenden. Der Schieber kann in unterschiedlichen Höhenpositionen In Arretierschlitze eingreifen und durch eine am oberen Ende des Adapters angreifende Druckkraft so gekippt werden, daß er sich aus den Arretierschlitzen löst.

Die höhenverstellbare Halterung kann auch so ausgebildet sein, daß diese durch die vom Gurtaufrollautomaten auf den Gurt ausgeübte Zugkraft in der jeweils eingestellten Höhenposition arretiert wird. Es können aber auch zusätzliche Federelemente im Bereich des Schiebers vorgesehen sein, die den Schieber in die jeweilige Arretierposition drücken, wie dies bei der oben erwähnten DE 34 01 529 C2 der Fall ist.

Vorteile der erfindungsgemäßen Konzeption sind darin zu sehen, daß sie die Unterbringung von drei nebeneinander angeordneten Kindersitzen auf der Rücksitzbank erlaubt und außerdem auch Kindersitze in Reboardanordnung auf der Sitzbankmitte plaziert werden können. Außerdem wird die unfallbedingte Insassenvorverlagerung für einen auf der Sitzmitte untergebrachten Insassen auf ein Minimum reduziert.

Anhand der Zeichnung wird die Erfindung näher erläutert.

Es zeigen:
- Fig. 1: die Rücksitzbank eines Kraftfahrzeugs, deren Mittelsitz eine Rückhalteeinrichtung mit einem Schultergurt hat,
- Fig. 2: eine schematische Darstellung einer am Rahmen einer Rückenlehne eines Mittetsitzes angeordneten höhenverstellbaren Halterung für einen Schultergurt, wie er in Figur 1 gezeigt ist,
- Fig. 3: einen höhenverstellbaren und arretierbaren Schieber, an dem die Halterung von Figur 2 mittels eines Adapters montierbar ist,
- Fig. 4: die Seitenansicht des in Figur 2 verwendeten Adapters und
- Fig. 5: die Rückseite des in Figur 2 verwendeten Adapters.

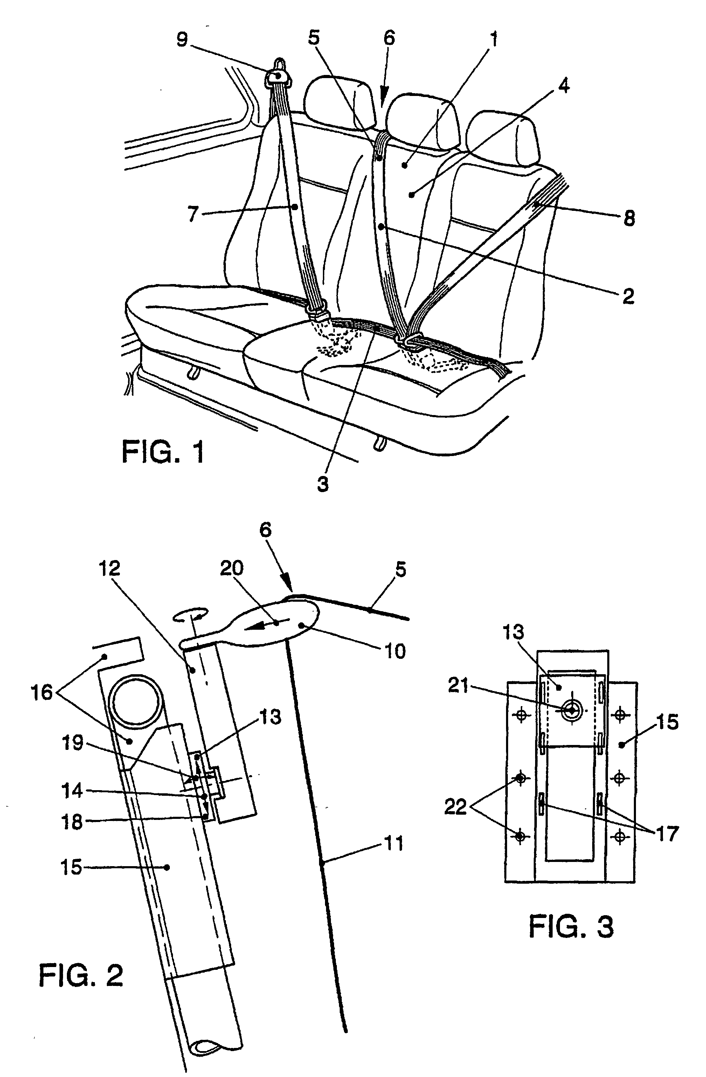

Die in Figur 1 dargestellte Rücksitzbank eines Kraftfahrzeugs ist mit einer Rückhalteeinrichtung ausgerüstet, die nicht nur für die an den Seiten befindlichen Außensitze jeweils einen Schultergurt hat, sondern auch für den Mittelsitz 1 der Rücksitzbank. Der Sicherheitsgurt 2 für den Mittelsitz 1 bildet im unteren Bereich einen Beckengurt 3 und im Bereich der Rückenlehne 4 einen schräg nach oben verlaufenden Schultergurt 5. Am höchsten Punkt 6 wird der Schultergurt 5 in einer hier verdeckt angeordneten höhenverstellbaren Halterung in der gewünschten Höhenposition gehalten. Die seitlichen Sicherheitsgurte 7, 8 werden hier in herkömmlichen, höhenverstellbaren Gurtumlenkem an den hinteren äußeren Säulen gehalten, von denen der Gurtumlenker 9 des Sicherheitsgurts 7 in Figur 1 dargestellt ist.

In der Seitenansicht von Figur 2 ist der obere Bereich der Rückenlehne eines Mittelsitzes ohne Polsterung schematisch dargestellt. Am höchsten Punkt 6 des Schultergurts 5 befindet sich eine höhenverstellbare Halterung 10, die einen Umlenker für den Schultergurt 5 bildet, der nach unten zu einem hier nicht dargestellten Gurtaufrollautomaten umgelenkt wird. Der nach unten führende Teil 11 des Schultergurts 5 kann verdeckt in der Rückenlehne 4 (Figur 1) des Mittelsitzes 1 geführt sein.

Die Halterung 10 ist über einen langgestreckten Adapter 12 an einem höhenverstellbaren und in unterschiedlichen Höhenpositionen arretierbaren Schieber 13 -gegebenenfalls verschwenkbar- befestigt. Der Doppelpfeil 14 deutet die Höhenverstellbarkeit an. Der Schieber 13 ist Teil einer an sich bekannten Verstelleinrichtung 15, die am Rahmen 16 des Mittelsitzes 1 befestigt ist. Die Verstelleinrichtung 15 besitzt Arretierschlitze 17, die in der Draufsicht von Figur 3 ersichtlich sind. Die Arretierung des Schiebers 13 erfolgt in der Weise, daß dieser mit an seiner Unterseite abstehenden seitlichen Stegen 18 in korrespondierende Arretierschlitze 17 eingreift.

Um den Schieber 13 aus der Arretierung zu lösen, kann dieser so gekippt werden, daß sich die Stege 18 aus den Arretierschlitzen 17 herausheben. Die dazu erforderliche Kippbewegung ist durch den gebogenen Doppelpfeil 19 in Figur 2 angedeutet. Die Kippbewegung zum Lösen der Arretierung erfolgt durch eine Druckkraft auf die Halterung 10 entsprechend der dort angegebenen Pfeilrichtung 20. Wird die Halterung 10 dann, nachdem die gewünschte Höhenposition eingestellt ist, wieder losgelassen, so kehrt der Schieber 13 aus der gekippten Stellung wieder in die dargestellte Arretierstellung zurück.

Figur 3 zeigt die Verstelleinrichtung 15 mit verstellbarem Schieber 13, der eine Gewindebohrung 21 zur Befestigung des Adapters 12 hat. Die Verstelleinrichtung 15 besitzt mehrere Befestigungslöcher 22, die zur Verschraubung mit dem Rahmen 16 der Rückenlehne 1 dienen.

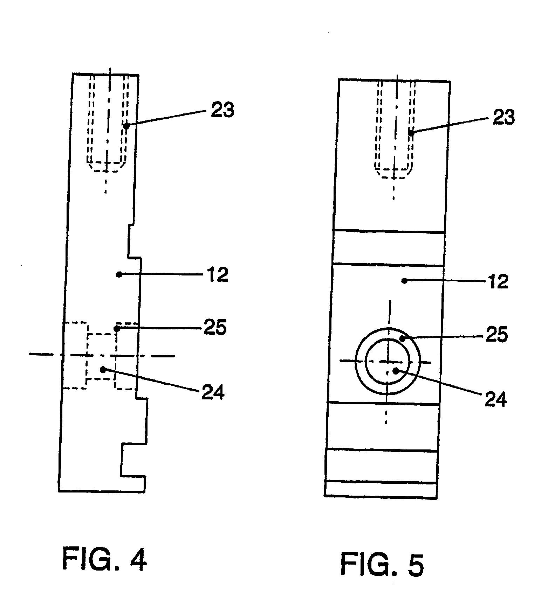

Der in den Figuren 4 und 5 dargestellte Adapter 12 hat an seinem oberen Ende eine Gewindebohrung 23 zur Befestigung der Halterung 10. In der unteren Hälfte besitzt der Adapter 12 eine Durchgangsbohrung 24 mit einer Ringschulter 25 zur Durchführung einer Befestigungsschraube, die mit ihrem Gewinde in die Gewindebohrung 21 des Schiebers 13 eingreift.

Der Adapter 12 ist in seiner äußeren Form einerseits an den Schieber 13 derart angepaßt, daß eine feste Verbindung mit dem Schieber 13 möglich ist. Außerdem sind der Adapter 12 und die als Umlenker dienende Halterung 10 so bemessen, daß die Halterung 10 von dem jeweiligen Benutzer des Schultergurts 5 erfaßt werden kann, um durch Ausübung einer Druckkraft auf die Halterung 10 die Arretierung lösen zu können und die Halterung 10 in die jeweils gewünschte Höhenposition verschieben zu können. Die Halterung 10 ist somit so an der Rückenlehne des Mittelsitzes angeordnet, daß diese wenigstens teilweise an der Polsterung der Rückenlehne vorsteht.

## Patentansprüche

1. Rückhalteeinrichtung für einen Mittelsitz (1) eines Fahrzeugs mit einem Sicherheitsgurt (2), der einen Schultergurt (5) bildet und im oberen Bereich der Rückenlehne des Mittelsitzes (1) in einer Halterung (10) einliegt, die an einem Rahmen (16) des Mittelsitzes (1) mittels eines arretierbaren Schiebers (13) höhenverstellbar und als über die Polsterung des Mittelsitzes (1) hinausragendes Umlenkelement ausgeführt ist, um das der Schultergurt zu einem Gurtaufrollautomaten geführt ist,
**dadurch gekennzeichnet,**
**daß** die Halterung (10) für den Gurtbenutzer frei zugänglich am oberen Ende eines gegenüber dem Schieber (13) verschwenkbaren Adapters (12) befestigt ist, durch den mittels einer an der Halterung (10) eingeleiteten Kippbewegung die Arretierung des Schiebers (13) lösbar ist.

2. Rückhalteeinrichtung nach Anspruch 1,
**dadurch gekennzeichnet,**
**daß** sich die höhenverstellbare Halterung (10) bei angelegtem Gurt durch Federkraft und/oder die dabei vom Gurtaufrollautomaten auf den Gurt ausgeübte Zugkraft in der jeweils eingestellten Höhenposition selbst arretiert.

3. Rückhalteeinrichtung nach Anspruch 1 oder 2,
**dadurch gekennzeichnet,**
**daß** die Halterung (10) über die Oberkante der Rückenlehne des Mittelsitzes (1) hinaus verschiebbar ist.

## Claims

1. Restraint system for a middle seat (1) of a vehicle with a seat belt (2) which forms a shoulder belt (5) and, in the upper region of the backrest of the middle seat (1), is enclosed in a mount (10) which can be adjusted in height on a frame (16) of the middle seat (1) by means of a lockable slide (13) and is designed as a deflecting element which protrudes over the padding of the middle seat (1) and about which the shoulder belt is guided to an automatic belt retractor, **characterized in that** the mount (10) is fastened, in a manner freely accessible to the belt user, to the upper end of an adapter (12) which can be pivoted with respect to the slide (13) and by means of which the locking of the slide (13) can be released by means of a tilting movement initiated at the mount (10).

2. Restraint system according to Claim 1, **characterized in that** when the belt is put on, the height-adjustable mount (10) automatically locks in the height position set in each case by spring force and/or by the tensile force exerted in the process on the belt by the automatic belt retractor.

3. Restraint system according to Claim 1 or 2, **characterized in that** the mount (10) can be displaced beyond the upper edge of the backrest of the middle seat (1).

## Revendications

1. Dispositif de retenue pour un siège central (1) d'un véhicule, avec une ceinture de sécurité (2) qui forme une ceinture d'épaule (5) et qui est placée dans un support (10) qui est situé dans la région supérieure du dossier du siège central (1), qui peut être ajusté en hauteur sur un cadre (16) du siège central (1) au moyen d'un coulisseau (13) apte à être bloqué et qui est configuré comme élément de renvoi qui déborde hors du capitonnage du siège central (1) et qui est passé autour de la ceinture d'épaule pour être guidé vers un enrouleur de ceinture, **caractérisé en ce que** le support (10) est fixé de manière à être librement accessible à l'utilisateur de la ceinture à l'extrémité supérieure d'un adaptateur (12) qui est apte à pivoter par rapport au coulisseau (13) et par lequel le blocage du coulisseau (13) peut être libéré par un déplacement de basculement du support (10).

2. Dispositif de retenue selon la revendication 1, **caractérisé en ce que** lorsque la ceinture est posée, le support (10) ajustable en hauteur se bloque de lui-même dans la position en hauteur sélectionnée, et ce par une force élastique et/ou par la force de traction exercée sur la ceinture par l'enrouleur de ceinture.

3. Dispositif de retenue selon la revendication 1 ou 2, **caractérisé en ce que** le support (10) peut être glissé hors du bord supérieur du dossier du siège central (1).
